# EUROPÄISCHE PATENTANMELDUNG

(11) **EP 1 873 116 A1**
(43) Veröffentlichungstag der Anmeldung: **02.01.2008**
(21) Anmeldenummer: 06733222.1
(22) Anmeldetag: 27.02.2006
(51) Int. Cl.: C01B 31/04, C25B 1/00

(54) **GRAPHITVERARBEITUNGSVERFAHREN UND REAKTOR DAFÜR**

(30) Priorität: 28.02.2005 RU 2005105210
(71) Anmelder: Avdeev, Viktor Vasilievich, Moscow, 117513 (RU)
(72) Erfinder: FINAENOV, Alexandr Ivanovich, Saratov, 410028 (RU); NIKOLSKAYA, Irina Viktorovna, Moscow, 117296 (RU); SOROKINA, Nataliya Evgenievna, Moscow, 119607 (RU); YAKOVLEV, Andrey Vasilievich, Saratov, 410005 (RU); NASTASIN, Vladimir Aleksandrovich, Engels, 413100 (RU); ZABUDKOV, Sergey Leonidovich, Engels, 413121 (RU); IONOV, Sergey Gennadievich, Moscow, 125557 (RU); GODUNOV, Igor Andreevich, Moscow, 117571 (RU)
(74) Vertreter: Jeck, Anton
(86) Internationale Anmeldenummer: PCT/RU2006/000086
(87) Internationale Veröffentlichungsnummer: WO 2006/091128

(57) **Zusammenfassung**

Die Erfindung betrifft die Technologie der Kohlengraphitmaterialien, insbesondere die Graphitbearbeitung zur elektrochemischen Gewinnung von Graphiteinlagerungsverbindungen für die Einfügung in Graphit und eine nachfolgende Gewinnung oxydierten Graphits, expandierten Graphits und Graphits mit Metalloxid- oder Feinmetallzusätzen. Die Erfindung kann sowohl zur Erzeugung einer flexiblen Folie als auch von Sorptionsmitteln, insbesondere Metallsorptionsmitteln, Katalysatoren und reaktiven Reaktionsmitteln für chemische Stromquellen, und in anderen technischen Bereichen verwendet werden. Das Verfahren zur Graphitbearbeitung gemäß der Erfindung besteht darin, dass eine Graphitanodenoxidation in einem Reaktor durchgeführt wird, der mit einer abschmelzbaren Bandanode versehen ist, die aus einem nicht passivierenden und in einem anodischen Elektrolyt lösbaren Metall oder einer Legierung besteht. Eine Vorrichtung zur Durchführung des Verfahrens gemäß der Erfindung wird ebenfalls offenbart und ist in Form eines Reaktors ausgebildet, der eine Graphitanodenoxidation durchführt und dazu mit einer Abschmelzanode versehen ist. Diese Erfindung ermöglicht, die Produktionskosten zu verringern und die Verarbeitungsmöglichkeiten zu erweitern. Dies wird **dadurch** erreicht, dass übliches Graphit und Verbundmaterialien hergestellt werden, die auf einem Porengraphit basieren, das Zusätze aus Metallen und Metalloxiden aufweist.

## Beschreibung

### Erfindungsgebiet

Die Erfindung betrifft die Technologie der Kohlengraphitmaterialien, insbesondere die Graphitbearbeitung zur elektrochemischen Gewinnung von Graphiteinlagerungsverbindungen mit einer nachfolgenden Gewinnung oxydierten Graphits, expandierten Graphits und Graphits mit Metalloxid- oder Feinmetallzusätzen. Die Erfindung kann sowohl zur Erzeugung einer flexiblen Folie als auch von Sorptionsmitteln, insbesondere Metallsorptionsmitteln, Katalysatoren und reaktiven Reaktionsmitteln für eine chemische Stromquelle, und in anderen technischen Bereichen verwendet werden.

### Stand der Technik

Graphitbearbeitungsverfahren zur Gewinnung verschiedener Endprodukte auf der Basis von expandiertem Graphit sind weit bekannt. Zu diesen Produkten können sowohl expandiertes Graphit selbst als auch expandiertes Graphit mit Metallzusätzen gehören, das ein Verbundmaterial bildet. Im Patent RU 2134155 wird ein Verfahren zur Graphitbearbeitung und Gewinnung eines Sorptionsmittels offenbart. Das Verfahren umfasst die Bearbeitung von Graphitpulver mit einem starken Oxydiermittel zur Gewinnung des oxydierten Graphits, die Vermischung des Pulvers des oxydierten Graphits mit dem Pulver von Fe-, Co- oder Ni-Verbindungen und mit einer organischen Flüssigkeit, die thermische Abscheidung der organischen Flüssigkeit nach der Vermischung, das Trocknen bis zum Schüttzustand und ein nachfolgendes, thermisches Expandieren der gewonnenen Schüttmischung. Im Laufe der Bearbeitung wird ein Sorptionsmittel gewonnen, das ein Verbundmaterial auf der Basis expandierten Graphits mit Zusätzen von ferromagnetischen Metallen darstellt.

Eine Reihe technischer Lösungen offenbart eine Graphitbearbeitung zur Gewinnung expandierten Graphits mittels einer anodischen Oxidation des Graphits.

Bekannt ist insbesondere ein Graphitbearbeitungsverfahren, das im Patent US 4350576 offenbart ist. Das Verfahren umfasst eine elektrochemische Bearbeitung mittels anodischer Oxidation in Wasserlösungen von H₂SO₄ und HNO₃ mit einer ständigen Stromdichte unter 500mA/cm² sechs bis sieben Stunden lang, eine nachfolgende Wäsche mit Wasser, eine Trocknung und eine Wärmebehandlung.

Im Patent wird auch eine Einrichtung zur Durchführung dieses Verfahrens offenbart, wobei diese Einrichtung ein zylindrisches Gehäuse mit Rohransatzstücken zur Beschickung mit Reaktionsstoffen und einem Abziehen von Graphiteinlagerungsverbindungen sowie eine im Gehäuse angeordnete Anode, Kathode und eine für einen Elektrolyten durchlässige Membran aufweist, deren Funktion ein zusätzliches Nachpressen des Graphits an die Anode ist.

Ein weiteres Verfahren zur Graphitbearbeitung ist in der internationalen Anmeldung WO96/33949 offenbart. Dieses Verfahren umfasst die Zufuhr einer Suspension, die Graphit und einen Elektrolyten auf der Basis mindestens einer starken Säure aufweist, in den Reaktionsraum zwischen einer Anode und einer Kathode, ein zusätzliches Nachpressen des Graphits an die Anode und eine nachfolgende, anodische Graphitoxidation mittels Stromdurchleitung bis zur Bildung von expandierten Graphiteinlagerungsverbindungen, eine Hydrolyse und eine Wäsche und Trocknung des oxidierten Graphits. Die Einrichtung zur Gewinnung des oxidierten Graphits enthält erfindungsgemäß einen Reaktor mit einem Gehäuse, das eine zylindrische Innenoberfläche mit Rohransatzstücken zur Beschickung mit Reaktionsstoffen und zum Abziehen von Graphiteinlagerungsverbindungen aufweist, sowie eine im Gehäuse angeordnete Anode und Kathode, ferner auf einer waagerechten Axialwelle befestigte Schaufeln und eine für einen Elektrolyten durchlässige Membran zum Nachpressen des Graphits an die Anode, die mit Schlitzen für Schaufeln ausgebildet ist.

Die Nachteile der bekannten, technischen Lösungen bestehen darin, dass eine elektrochemische Synthese der Graphiteinlagerungsverbindungen bis heute in Elektrolysezellen durchgeführt worden ist, wobei auf einer Elektrodenoberfläche und auf einer Oberfläche einer Reaktionskammer eine Platinschicht aufgetragen wird (s. Yakovleva E. V., Yakovlev A. V., Finaenov A. I., " Elektrochemische Synthese von thermisch expandierten Graphitverbindungen im salpetersauren Elektrolyten", Zeitschrift der angewandten Chemie, 2002, T. 75, MIO.-C. 1632-1638; Yakovlev A. V., Finaenov A. I., "Elektrochemische Synthese von Graphiteinlagerungsverbindungen mit Salpetersäure zum Gewinnen expandierten Graphits", Zeitschrift der angewandten Chemie, 1999, T.72, Nr. I.-C. 88-91), wodurch eine garantiert qualitative Synthesedurchführung ermöglicht wird. Die Platinschicht verteuert jedoch das Verfahren der anodischen Oxidation des Graphits wesentlich und kompliziert dessen Produktion.

Ferner verfügen die bekannten, technischen Lösungen nicht über die nötige, vielseitige Anwendbarkeit; bis jetzt ist aus der Graphitbearbeitung, die die anodische Oxidation umfasst, nur ein konventionelles, halbfertiges Produkt als oxidiertes Graphit gewonnen worden, das mittels einer nachfolgenden, thermischen Expansion in expandiertes Graphit umgewandelt wird. Niemand stellte sich vorher die Aufgabe, auf der Basis expandierten Graphits mit Zusätzen von Metallen oder deren Oxiden einen Verbundstoff zu gewinnen.

### Offenbarung der Erfindung

Die Aufgabe der Erfindung besteht in der Verbilligung der Technologie durch eine wesentliche Verminderung oder einen vollständigen Verzicht auf die Anwendung von Platin, das als eine inerte, stromleitende Schicht in den bekannten Konstruktionen dient, sowie in der Erweiterung der technologischen Möglichkeiten durch Gewinnung sowohl des konventionell oxidierten Graphits und expandierten Graphits auf der Basis dieses oxidierten Graphits als auch durch Gewinnung eines Verbundstoffs auf der Basis des expandierten Graphits mit Zusätzen von Metallen oder deren Oxiden.

Die gestellte Aufgabe wird durch das Verfahren gemäß der Erfindung zur Graphitbearbeitung gelöst, das folgende Schritte umfasst:
(a) eine Suspensionsaufbereitung des Graphits im Elektrolyten, der über eine Elektronenleitfähigkeit verfügt,
(b) eine Beschickung der Reaktionskammer mit der Suspension, wobei die Reaktionskammer durch eine Kathode und eine reagierende Anode aus einem nicht passivierenden und im Elektrolyten anodisch lösbaren Metall oder einer Legierung gebildet wird,
(c) eine anodische Oxidation des Graphits mit der Gewinnung von Produkten der anodischen Oxidation, die Graphiteinlagerungsverbindungen und metallische Kationen der Anode enthalten,
(d) ein Abziehen der Produkte der anodischen Oxidation,
(e) eine nachfolgende Bearbeitung der Produkte aus der anodischen Oxidation mit der Gewinnung von Zwischenprodukten,
(f) ein Trocknen der Zwischenprodukte und
(g) eine thermische Expansion der Zwischenprodukte.

Bei konkreten Ausführungen der Erfindung wird die gestellte Aufgabe dadurch gelöst, dass die nachfolgende Bearbeitung im Schritt (e) mittels einer Hydrolyse der Produkte der anodischen Oxidation und einer Wäsche zur Säure- und Metallkationenentfernung durchgeführt wird, wobei als Zwischenprodukt oxydiertes Graphit gewonnen wird.

Bei einigen konkreten Ausführungen der Erfindung wird die nachfolgende Bearbeitung im Schritt (e) mittels einer Erhöhung des pH-Werts der Produkte aus der anodischen Oxidation zur Überführung der Metallkationen in nicht lösliche Verbindungen von Metallhydroxiden durchgeführt. Als Zwischenprodukt wird oxydiertes Graphit mit oberflächlichen Verbindungen von Metallhydroxiden gewonnen. Die Erhöhung des pH-Werts wird in diesem Fall mittels einer Nachsetzung von Alkali oder kalziniertem Soda verwirklicht.

Zur Reduktion der Metallhydroxide zu Feinmetallen oder Legierungen ist es zweckmässig, den Schritt (g) in Wasserstoff durchzuführen.

In der besten Ausführung der Erfindung ist es vorteilhaft, als Elektrolyten zur Suspensionsaufbereitung im Schritt (a) Salpetersäure zu verwenden.

Die gestellte Aufgabe wird auch durch einen Reaktor zur anodischen Graphitoxidation gelöst, der Folgendes enthält:
- ein Gehäuse mit einer zylindrischen Innenfläche und mit Rohransatzstücken zur Beschickung der über die Elektronenleitfähigkeit verfügenden Suspension des Graphits im Elektrolyten und zum Abziehen der Produkte der anodischen Oxidation,
- eine reagierende Anode, die im unteren Teil des Gehäuses zwischen Beschickungs- und Entleerungsstutzen angeordnet, als bewegliches Band aus einem nicht passivierenden Metall oder einer Legierung ausgebildet und im Elektrolyten anodisch löslich ist, wobei die Bandenden an einer Ab- und Aufwickeltrommel befestigt sind,
- eine Kathode, die an einer axialen Welle eingeordnet ist, und
- eine auf der äußeren Kathodenseite liegende Membran.

Bei konkreten Ausführungen der Erfindung kann der Reaktor zusätzlich eine Führungsrolle enthalten, die zwischen dem Entleerungsstutzen und der Aufwickeltrommel angeordnet ist.

Die Kathode im Reaktor kann als Trommel mit gelochter Seitenoberfläche ausgebildet sein.

Außerdem können die Kathode und die Anode mit einer Abstreifvorrichtung versehen sein. In diesem Fall kann die Anodenabstreifvorrichtung als eine vor der Aufwickeltrommel positionierte Düse ausgebildet sein. Die Kathodenabstreifvorrichtung kann als Messer aus Fluorplast ausgebildet sein.

Die Erfindung ist folgendermaßen ausgebildet.

Der Reaktor zur anodischen Oxidation mit der Anode, die aus einem nicht passivierenden und im Elektrolyten anodisch löslichen Metall oder einer Legierung ausgeführt ist, wird mit einer Suspension beschickt, die über die Elektronenleitfähigkeit verfügt, und dann wird eine anodische Graphitoxidation durchgeführt.

Unter der Suspension, die über die Elektronenleitfähigkeit verfügt, werden verbundene, kolloid-disperse Systeme verstanden, in denen der Kontakt zwischen den Graphitpartikeln erhalten bleibt. Bei einer Störung des Kontakts, d.h. beim Übergang in einen frei-dispersen Zustand, läuft ein Strom in der Suspension durch den Elektrolyten; somit entsteht eine Einlagerungsverbindung nur an denjenigen Graphitpartikeln, die einen Elektronenkontakt bei der Stromabführung an der Anode haben, d.h., die Verfügbarkeit der Suspension mit der Elektronenleitfähigkeit ermöglicht eine gleichmäßige Oxidation des gesamten Graphitvolumens.

Die Verfügbarkeit der Elektronenleitfähigkeit ist durch die Wahl des Verhältnisses der Graphitmenge und der Elektrolytmenge bedingt. Für Suspensionen auf Salpetersäurebasis beträgt das Verhältnis der Graphitmenge (M_{G}) zur Elektrolytmenge (M_{E}) M_{E}:M_{G}=1: (0,14-2,5).

Die Durchführung der anodischen Oxidation des Graphits, der sich in der über die Elektronenleitfähigkeit verfügenden Suspension befindet, in der Elektrolysezelle mit der reagierenden Anode, die als nicht passivierendes, im Elektrolyten anodisch lösliches Metall oder Legierung ausgebildet ist, sowie die Bandform dieser Anode ermöglichen, nicht nur ein die Graphiteinlagerungsverbindung enthaltendes Produkt der anodischen Oxidation zu gewinnen, sondern auch Metallkationen der Anode in das Suspensionsvolumen einzugeben.

Je nachdem, was als Endprodukt, nämlich konventionelles, expandiertes Graphit oder ein Verbundstoff in Form von expandiertem Graphit mit Zusätzen von Metallen oder deren Oxiden, gewünscht wird, ist es möglich, weitere Schritte durchzuführen.

Zum Gewinnen konventionellen, expandierten Graphits wird das aus der anodischen Oxidation gewonnene Produkt, das die Einlagerungsverbindungen und die Metallkationen der reagierenden Anode enthält, einer Hydrolyse, einer nachfolgenden Wäsche zur Entfernung der Säure und Metallkationen sowie einer Trocknung unterzogen, wodurch als Zwischenprodukt oxydierter Graphit gewonnen wird.

Dann wird das Graphit bis zur Gewinnung des konventionellen, expandierten Graphits thermisch behandelt.

Wenn die Aufgabe gestellt wird, ein Verbundmaterial mit besonderen Eigenschaften zu gewinnen, beispielsweise zur Anwendung in Katalysatoren oder in Sorptionsmitteln, dann wird das die Graphiteinlagerungsverbindungen und Metallkationen enthaltende Produkt wie folgt gehandhabt. Zuerst wird die Konzentration der HydroxylGruppen durch eine Erhöhung des pH-Werts in der Suspension bis 4,5-5,5 vergrößert. Der pH-Wert wird mittels Zugabe eines Alkalis, das aus der Gruppe NaOH, Ca₂OH und KOH gewählt werden kann, oder von kalziniertem Soda erhöht.

Mit der Zugabe des Alkalis werden Metallkationen in die nicht lösliche Verbindungen von Metallhydroxiden überführt, die auf der Partikeloberfläche des oxydierten Graphits ausgeschieden werden.

Die gewonnenen Zwischenprodukte können bis zum Schüttzustand einfach getrocknet und danach zur Gewinnung einer Verbundstruktur auf der Basis des expandierten Graphits mit gleichmäßig verteilten Metalloxiden thermisch expandiert werden.

Die genannten Zwischenprodukte können zusätzlich einer Wärmebehandlung in Wasserstoff untergezogen werden, wodurch ermöglicht wird, Metallhydroxide durch Oxide zu Metallen mit gleichzeitiger oder nachfolgenden thermischen Expansion zu reduzieren. In dieser Weise können beispielsweise die so genannten Metallsorptionsmittel gewonnen werden, die zur Sammlung von Verschmutzungen verwendet werden; derartige Sorptionsmittel können mit Magnetfallen leicht eingesammelt werden.

Somit besteht erfindungsgemäß die Möglichkeit, entweder das konventionelle oder das expandierte Graphit oder ein expandiertes Graphit als Metalle oder Metalloxide enthaltendes Verbundmaterial zu gewinnen.

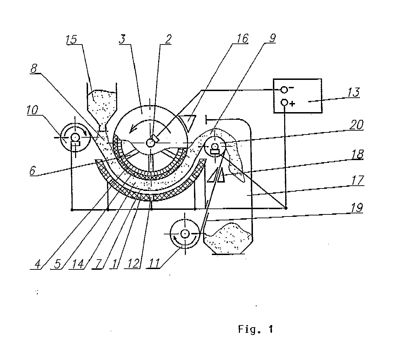

Die Erfindung wird nun anhand eines Ausführungsbeispiels näher erläutert. Fig.1 zeigt eine schematische Darstellung einer Elektrolysezelle zur elektrochemischen Bearbeitung von Graphitsuspensionen mit einem beweglichen Anodenband. In dieser Figur bedeutet:
- 1: ein Reaktorgehäuse,
- 2: eine Welle des Kathodenantriebs mit einem elektrischen Gleitkontakt,
- 3: eine Kathode,
- 4: eine gelochte Seitenoberfläche der Kathode,
- 5: eine Membran,
- 6: eine Kathodennadel,
- 7: eine reagierende Anode in Bandform,
- 8: ein Stutzen zur Suspensionsbeschickung,
- 9: ein Stutzen zum Abziehen der Produkte der anodischen Oxidation,
- 10: eine Abwicklungstrommel,
- 11: eine Wicklungstrommel des Anodenbands,
- 12: zusätzliche Anodenkontakte,
- 13: eine Versorgungseinheit,
- 14: eine Graphit-Säure-Suspension,
- 15: ein Behälter zur Zufuhr der Graphit-Säure-Suspension,
- 16: ein Messer aus Fluorplast,
- 17: ein Speicherbehälter,
- 18: eine Düse zur Entfernung des Kohlenstoffmaterials,
- 19: ein Ventil und
- 20: eine Führungsrolle.

Im Gehäuse 1 des Reaktors ist auf der Welle 2 mit einem elektrischen Gleitkontakt die Kathode 3 drehbar angeordnet, die in Form einer Trommel mit der gelochten Seitenoberfläche 4 zur Ableitung von Austrittsgasen während der elektrochemischen Synthese der Graphiteinlagerungsverbindungen aus dem Trommelraum ausgeführt ist, an der die Membran 5 angeordnet ist. Die Kathode 3 wird auf der Welle 2 mittels Nadeln 6 befestigt, die auch die Stromzufuhr von der Welle 2 zur Kathode 3 gewährleisten.

Die reagierende Anode 7 ist im unteren Teil des Gehäuses zwischen den Stutzen der Suspensionsbeschickung 8 und dem Abziehstutzen der Oxidationsprodukte 9 angeordnet. Die Anode 7 ist als bewegliches Band aus einem nicht passivierenden Metall oder einer Legierung, im Elektrolyten anodisch lösbar, ausgebildet. Die Bandenden sind an der Abwicklungstrommel 10 und der Aufwicklungstrommel 11 befestigt.

Da die Suspension auf der Graphitbasis über die Elektronenleitfähigkeit verfügt, fehlt das freie Volumen im Reaktor; der elektrische Kontakt der Kathode mit der Graphitsuspension wird durch eine mit dem Elektrolyten getränkte Membran 5 verwirklicht. Außerdem ermöglicht die Membran, einen Kurzschluss zu verhindern. Da die bewegliche Stromableitung der Anode 7 einen hohen elektrischen Widerstand besitzt, ist der Reaktor mit zusätzlichen Anodenkontakten 12 ausgestattet, um eine gleichmäßige Verteilung der Strombelastung zu erzielen.

Der Strom wird von der Versorgungseinheit 13 an die Kathode durch die Welle 2 mit dem elektrischen Kontakt, an die Anode durch die Kontakte 12 in der ganzen Länge der Reaktionskammer und sowohl zum Anodenband als auch zum Gehäuse geleitet.

Die anodische Oxidation in der erfindungsgemäßen Einrichtung gemäß der Erfindung wird wie folgt durchgeführt.

Die Graphit-Säure-Suspension 14 wird aus dem Behälter 15 dem Beschickungsbereich der Elektrolysezelle über den Stutzen 8 zugeführt. Danach gelangt sie in die Reaktionskammer, die durch die Anode 7 und die Kathode 3 gebildet wird. Die Suspension bewegt sich mittels des Anodenbands 7, das von der Abwicklungstrommel 10 zur Aufwicklungstrommel 11 läuft, und der drehenden Kathode 3 in Form einer Trommel.

Bei der Bewegung der Suspension durch die Reaktionskammer unter den Bedingungen der anodischen Polarisation erfolgt die Interkalation der Graphitmatrix durch Säureanionen und das Ausfällen der Metallkationen, die bei der Auflösung der Stromableitung der Anode entstehen, auf der Oberfläche der Graphitpartikel.

Die Mischung der Graphiteinlagerungsverbindungen mit den Metallkationen der Anode wird von der Trommeloberfläche der Kathode 3 mittels der Messer 16 aus Fluorplast abgestreift und gelangt durch den Entleerungsstutzen 9 in den Speicherbehälter 17. Die reagierende Stromableitung der Anode 7 wird von der verbleibenden Mischung mit Hilfe der Düse 18, die als Flachspalt zur Abnahme der restlichen festen Phase ausgebildet ist, zusätzlich gereinigt und kommt durch das Ventil 19 zur Aufwicklungstrommel 11 der Bandanode 7. Je nach Verschleiß kann die Anode 7 entweder entsorgt oder wiederholt in der elektrochemischen Synthese der Graphiteinlagerungsverbindungen verwendet werden.

Im Gehäuse des Reaktors 1 kann auch eine Führungsrolle 20 angeordnet werden, die zwischen dem Entleerungsstutzen 9 und der Abwicklungstrommel 11 liegt.

Zusätzlich kann der Reaktor mit einem Mischer, einem Stutzen zur Gasabfuhr und zur Entfernung des überschüssigen Elektrolyts, einer Pulsationskolonne zur Hydrolyse und Graphitwäsche, Filtern zur Filtrierung des oxidierten Graphits, einem Trockner (nicht dargestellt) usw. ausgestattet werden.

### Die Hauptparameter der Einrichtung sind:

Durchmesser der Kathodentrommel: 366mm
Breite des Anodenbandes: 125mm
Länge des Reaktionsbereiches: 556mm
Drehgeschwindigkeit der Trommel: 1/12 Umdrehungen pro Stunde und
Geschwindigkeit des Bands: 95 mm/Stunde.

### Herstellungsbeispiele gemäß der Erfindung

### Beispiel 1

Im Mischer wird die Suspension aus Graphit mit einer Teilchengröße der Hauptfraktion über 200µm und Salpetersäure aufbereitet. Das Verhältnis der Stromleitfähigkeit der Suspension zur Stromleitfähigkeit der Salpetersäure liegt über Eins, d.h. die Suspension verfügt über die Elektronenleitfähigkeit. Aus dem Mischer wird die Suspension der Reaktionskammer des Reaktors zugeführt, dessen bewegliches Anodenband aus rostfreiem Stahl, 12X18H10T, hergestellt ist.

Die Bearbeitungsparameter waren: I=200A, t=60min vor der Durchleitung der Strommenge von 200Ah für die Suspension auf der Basis einer 58%-igen Salpetersäure von 2,5kg mit einem Verhältnis von M_{G}: M_{E}=1:1,5. Nach der Bearbeitung im Laufe von 60 Minuten ist eine Mischung der Graphiteinlagerungsverbindungen mit den Metallkationen der Anode gewonnen, die dann der Hydrolyse, Wäsche und Trocknung unterzogen wird. Daraufhin wurden aus der Mischung alle Kationen ausgewaschen, und oxidiertes Graphit wurde gewonnen. Nachfolgend wurde das oxidierte Graphit bei einer Temperatur von 900°C expandiert, und damit wurde expandiertes Graphit mit einer Schüttdichtevon 3,5g/l gewonnen. 70Ah des Gesamtstroms von 200Ah fielen dabei auf die Stahlauflösung, und 130Ah fielen auf die Graphitoxidation.

### Beispiel 2

Eine anodische Graphitoxidation wurde im Reaktor mit dem beweglichen Anodenband durchgeführt.

Die Bearbeitungsparameter waren: l = 100A, t = 120min vor der Durchleitung einer Strommenge von 200Ah für die Suspension auf der Basis einer 58%-igen Salpetersäure von 2,3kg mit einem Verhältnis von M_{G}: M_{E}=1:1,3. Nach der Bearbeitung im Laufe von 120 Minuten wurde eine Mischung der Graphiteinlagerungsverbindungen mit den Metallkationen der Anode gewonnen. Die Wäsche mit dem Wasser wurde nicht durchgeführt. In die gewonnene Mischung der Graphiteinlagerungsverbindungen und der Metallkationen der Anode wurde 140g kalziniertes Soda zugegeben. Als Zwischenprodukt wurde oxidiertes Graphit mit oberflächlichen Verbindungen von Metallhydroxiden gewonnen, der einer Trocknung unterzogen wurde. Nach der thermischen Expansion wurde expandiertes Graphit erhalten, das 3-7% Metalloxide bei der Umrechnung auf Feinmetall mit einer Schüttdichte von 30g/l enthielt.

### Beispiel 3

Eine anodische Graphitoxidation wurde im Reaktor mit dem beweglichen Anodenband durchgeführt. Als Material der Stromableitung der Anode wurde Aluminium eingesetzt.

Die Bearbeitungsparameter waren: I=300A, t=40min vor der Durchleitung von 200Ah für die Suspension auf der Basis einer 58%-iger Salpetersäure von 2,4kg mit einem Verhältnis von M_{G}:M_{E} =1:1,4. Nach der Bearbeitung im Laufe von 40 Minuten wurde eine Mischung von Graphiteinlagerungsverbindungen und von Aluminiumkationen gewonnen. Die Wäsche zur Entfernung der Metallionen wurde nicht durchgeführt. Dem gewonnenen Produkt auf der Basis der Graphiteinlagerungsverbindungen und Aluminiumkationen wurden 450g NaOH zugegeben. Oxidiertes Graphit mit oberflächlichen Vereinigungen mit Aluminiumhydroxid wurde gewonnen. Das gewonnene Produkt wurde getrocknet und in Wasserstoff bei einer Temperatur von 900°C im Laufe von 25 Minuten ausgeglüht. Expandiertes Graphit mit einer Schüttdichte von 6,5g/l und mit 3-10 Gew.-% Aluminium wurde gewonnen.

### Beispiel 4

Eine anodische Oxidation des Graphits wurde im Reaktor mit dem beweglichen Anodenband durchgeführt. Als Stoff der Anode wurde Nickel verwendet.

Die Parameter der Bearbeitung waren: l=300A, t=60min vor der Durchleitung einer Strommenge von 300Ah für die Suspension auf der Basis einer 58%-iger Salpetersäure von 2,5 kg mit einem Verhältnis von M_{G}:M_{E} =1:1,5. Bei der Bearbeitung im Laufe von 60 Minuten wurden die Graphiteinlagerungsverbindungen gewonnen. Die Wäsche zur Entfernung der Metallionen wurde nicht durchgeführt. In das erhaltene Produkt auf der Basis der Graphiteinlagerungsverbindungen und von Ni-Kationen wurde 450g NaOH zugegeben. Oxidiertes Graphit mit oberflächlichen Verbindungen von Nickelhydroxiden wurde gewonnen.. Das Produkt wurde getrocknet und in Wasserstoff bei einer Temperatur von 900°C im Laufe von 25 Minuten ausgeglüht. Expandiertes Graphit mit einer Schüttdichte von 5,5g/l und mit 3-7 Gew.-% Nickel wurde gewonnen.

## Patentansprüche

1. Verfahren zur Graphitbearbeitung,
**gekennzeichnet durch** folgende Schritte:
(a) Aufbereitung der Graphitsuspension in einem Elektrolyten, der über die Elektronenleitfähigkeit verfügt,
(b) Beschickung der Reaktionskamme mit der Suspension, wobei die Reaktionskammer **durch** eine Kathode und eine reagierende Anode aus nicht passivierendem und im Elektrolyten anodisch löslichem Metall oder einer-Legierung gebildet ist,
(c) anodische Graphitoxidation mit der Gewinnung von Produkten der anodischen Oxidation, wobei diese Produkte Graphiteinlagerungsverbindungen und Metallkationen der Anode umfassen,
(d) Abziehen der Produkte der anodischer Oxidation,
(e) nachfolgende Bearbeitung der Produkte aus der anodischen Oxidation mit der Gewinnung von Zwischenprodukten,
(f) Trocknen der Zwischenprodukte und
(g) thermische Expansion der Zwischenprodukte.

2. Verfahren nach Anspruch 1,
**dadurch gekennzeichnet,**
**dass** die nachfolgende Bearbeitung im Schritt (e) mittels einer Hydrolyse der Produkte der anodischen Oxidation und einer Wäsche zur Entfernung der Säure und Metallkationen durchgeführt und als Zwischenprodukt oxidiertes Graphit gewonnen wird.

3. Verfahren nach Anspruch 2,
**dadurch gekennzeichnet,**
**dass** die nachfolgende Bearbeitung im Schritt (e) durch eine Erhöhung des pH-Werts der Produkte aus der anodischen Oxidation zur Überführung der Metallkationen in nicht lösbare Verbindungen von Metallhydroxiden durchgeführt wird und als Zwischenprodukt oxidiertes Graphit mit oberflächlichen Verbindungen von Metallhydroxiden gewonnen wird.

4. Verfahren nach Anspruch 3,
**dadurch gekennzeichnet,**
**dass** die Erhöhung des pH-Werts durch eine Zugabe eines Alkalis oder von kalziniertem Soda durchgeführt wird.

5. Verfahren nach Anspruch 3,
**dadurch gekennzeichnet,**
**dass** der Schritt (g) in Wasserstoff verwirklicht wird.

6. Verfahren nach Anspruch 1,
**dadurch gekennzeichnet,**
**dass** als Elektrolyt bei der Suspensionsaufbereitung im Schritt (a) Salpetersäure verwendet wird.

7. Verfahren nach Anspruch 1,
**dadurch gekennzeichnet,**
**dass** es Folgendes umfasst:
- einen Körper mit einer zylindrischen Innenoberfläche und einen Stutzen zur Beschickung der Suspension des Graphits im Elektrolyten, der über die Elektronenleitfähigkeit verfügt, und zum Abziehen der Produkte aus der anodischen Oxidation,
- eine reagierende Anode, die im unteren Gehäuseteil zwischen den Beschickungs- und Abziehstutzen angeordnet, als bewegliches Band aus nicht passivierendem Metall oder Legierung ausgeführt und im Elekrtolyten anodisch löslich ist, wobei die Bandenden auf einer Ab- und Aufwicklungstrommel befestigt sind,
- eine Kathode, die an einer axialen Welle angeordnet ist, und
- eine Membran, die auf der äußeren Kathodenseite angeordnet ist.

8. Verfahren nach Anspruch 7,
**dadurch gekennzeichnet,**
**dass** es zusätzlich eine Führungsrolle aufweist, die zwischen dem Abziehstutzen und der Aufwicklungstrommel angeordnet ist.

9. Verfahren nach Anspruch 7,
**dadurch gekennzeichnet,**
**dass** die Kathode als Trommel mit einer gelochten Seitenoberfläche ausgeführt ist.

10. Verfahren nach Anspruch 7,
**dadurch gekennzeichnet,**
**dass** die Kathode und Anode mit Abstreifeinrichtungen versehen sind.

11. Verfahren nach Anspruch 10,
**dadurch gekennzeichnet,**
**dass** die Abstreifeinrichtung der Anode als Düse ausgebildet und vor der Abwicklungstrommel angeordnet ist.
